# FASCICULE DE BREVET EUROPEEN

(11) **EP 3 283 375 B1**
(45) Date de publication et mention de la délivrance du brevet: **16.10.2019**
(21) Numéro de dépôt: 16716850.9
(22) Date de dépôt: 13.04.2016
(51) Int. Cl.: B64D 11/06

(54) **SIEGE D'AERONEF A ASSISE RENFORCEE**
FLUGZEUGSITZ MIT VERSTÄRKTEM SITZUNTERGESTELL
AIRCRAFT SEAT WITH REINFORCED SEAT BASE

(30) Priorité: 13.04.2015 US 201562146638 P
(43) Date de publication de la demande: 21.02.2018
(73) Titulaire: Zodiac Seats France, 36100 Issoudun (FR)
(72) Inventeur: MARAIS, Jean-Charles, 36260 Sainte-Lizaigne (FR); MARAIS, Joël, 18290 Charost (FR); RAFFIN, Vincent, 36100 Issoudun (FR)
(74) Mandataire: Marconnet, Sébastien
(86) Numéro de dépôt international: PCT/EP2016/058070
(87) Numéro de publication internationale: WO 2016/166131

(56) Documents cités:
- WO-A1-2004/074039
- FR-A1- 2 648 108
- US-A- 3 468 582
- US-A1- 2007 267 543
- US-B1- 6 402 244
- US-B1- 8 550 564

## Description

La présente invention porte sur un siège d'aéronef à assise renforcée.

La fonction principale d'un siège d'aéronef est d'assurer le maintien du passager, en particulier lorsque l'aéronef subit des perturbations ou un accident. A cet effet, les sièges sont fixés sur des rails issus généralement du plancher ou éventuellement de la paroi latérale de la cabine d'aéronef. En outre, des ceintures de sécurité ancrées sur la structure du siège sont configurées pour enserrer le corps du passager.

La tenue mécanique du siège est vérifiée à travers la réalisation de tests d'homologation permettant d'évaluer sa capacité à absorber l'énergie cinétique du passager en cas de crash. Un des tests consiste notamment à simuler une déformation du plancher de la cabine, avant de faire subir au siège une accélération représentative d'un crash.

Afin de supporter cette déformation, les sièges sont conformés pour présenter une certaine souplesse tout en étant suffisamment rigides pour supporter le choc. De façon connue en soi, la rigidité du siège est conférée par une ou plusieurs poutres situées sous le siège. Ces poutres permettent de transférer l'effort de charge depuis l'assise ou la ceinture de sécurité vers les pieds du siège. Toutefois, de telles configurations de sièges présentent un poids élevé et impliquent une grande diversité de pièces en chaîne de fabrication.

Le document US8550564 décrit un siège de passager d'avion comprenant une traverse avant et une traverse arrière à section ouverte, ainsi qu'une membrane de coque de siège supportée par lesdites traverses avant et arrière.

L'invention vise notamment à remédier efficacement aux inconvénients mentionnés ci-dessus en proposant un siège comportant les caractéristiques de la revendication 1. Le siège selon l'invention est destiné à être installé dans une cabine d'aéronef, et comporte une assise à au moins une place. L'assise comporte une paroi ayant une forme définissant au moins un renforcement transversal de l'assise.

L'invention permet ainsi de conférer une bonne rigidité au siège tout en garantissant sa flexibilité lors de sa déformation en cas d'accident. En outre, l'invention permet de réduire la diversité des pièces en chaîne de montage et d'obtenir un gain en poids substantiel du fait de la possibilité de supprimer la présence des poutres situées sous le siège. Selon une réalisation, l'assise est réalisée d'un seul tenant.

Selon une réalisation, l'assise définit au moins deux places. Une telle configuration à assise monobloc permet de faciliter la réalisation du siège et d'améliorer la capacité de déformation d'un siège multiplaces.

Selon l'invention, le siège comporte en outre au moins un ancrage d'une ceinture de sécurité positionné dans un logement d'un pied de support supportant l'assise. Cela permet de minimiser l'effort de charge passant par l'assise du fait de la reprise directe par le pied de support de l'effort généré par le passager.

Selon l'invention, l'assise est localement serrée entre l'ancrage de ceinture de sécurité et le pied de support du siège.

Selon une réalisation, le renforcement transversal présente une section constante suivant toute sa longueur. Une telle configuration présente l'intérêt d'être modulable en permettant d'adapter le positionnement des pieds le long du siège par rapport aux rails dont la position est susceptible de varier du fait du l'irrégularité du plancher de la cabine de l'aéronef.

Selon une réalisation, l'assise comporte une portion principale d'assise et un rebord issu de la portion principale d'assise.

Selon une réalisation, le siège comporte deux renforcements transversaux positionnés de part et d'autre de la portion principale d'assise.

Selon une réalisation, le siège comporte au moins un dossier apte à pivoter par rapport à l'assise autour d'un axe transversal.

Selon une réalisation, le dossier est monté rotatif sur une crosse.

Selon une réalisation, la crosse est solidaire de l'assise.

Selon une réalisation, le siège comporte au moins un vérin positionné entre le dossier et la crosse correspondante. Cela permet de régler l'inclinaison du dossier mobile autour de l'axe transversal.

Selon une réalisation, le siège comporte en outre des accoudoirs situés de part et d'autre de chaque place du siège.

Selon une réalisation, la section du ou des renforcements longitudinaux présentent une forme en O, en T, en L, ou en U.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres. L'invention est définie dans le jeu de revendications ci-joint.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:
- La figure 1 est une vue en perspective d'un siège d'aéronef selon la présente invention;
- La figure 2 est une vue en perspective détaillée de l'assise d'un siège d'aéronef selon l'invention muni de deux renforcements transversaux;
- La figure 3 est une vue en coupe de l'assise d'un siège d'aéronef selon la présente invention;
- La figure 4 est une vue en perspective de la partie inférieure d'un siège d'aéronef selon l'invention illustrant le montage des crosses;
- La figure 5 est une vue en perspective de la partie inférieure d'un siège d'aéronef selon l'invention illustrant le montage des dossiers sur les crosses;
- La figure 6 est une vue en coupe de l'assise d'un siège d'aéronef selon l'invention illustrant le chemin de l'effort de charge lors d'un crash;
- La figure 7 représente un siège d'aéronef selon l'invention déformé avant l'essai de crash pour simuler une déformation du plancher subie en cas de crash;

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

En outre, dans la description qui suit, l'axe longitudinal X1 du siège correspond à l'intersection entre un plan vertical médian du siège et un plan horizontal, tandis que l'axe transversal X2 du siège est perpendiculaire à l'axe longitudinal X1 et se situe dans un plan sensiblement horizontal. L'axe longitudinal X1 du siège pourra être parallèle à l'axe longitudinal de l'aéronef lorsque le siège est installé dans la cabine d'aéronef. Par ailleurs, on considère que la partie avant du siège est située du côté opposé au dossier, tandis que la partie arrière du siège est située du côté du dossier.

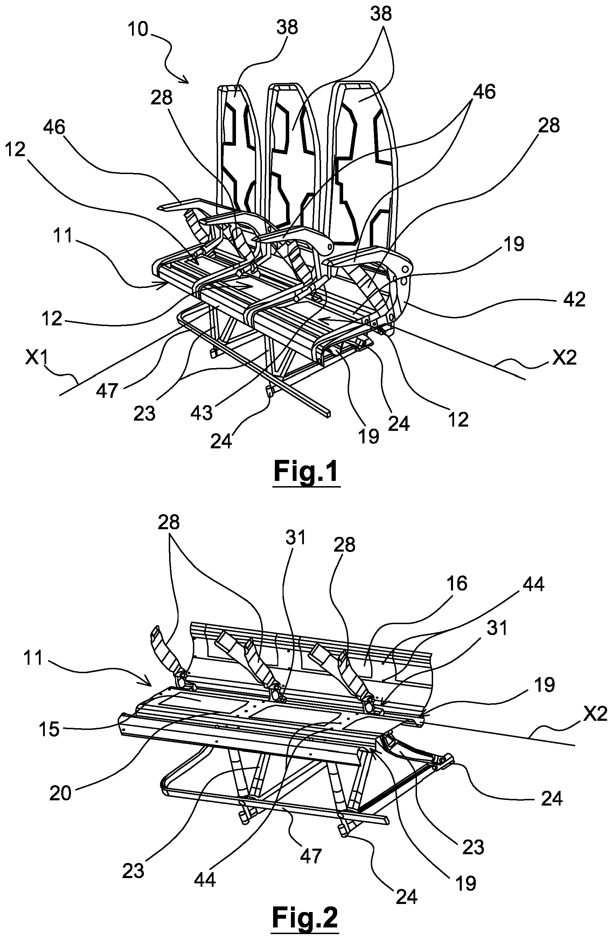

La figure 1 montre un siège 10 destiné à être installé dans une cabine aéronef. Dans l'exemple représenté, le siège 10 comporte une assise 11 définissant trois places 12. L'assise 11 est réalisée d'un seul tenant, c'est à dire que l'assise 11 est constituée par une seule pièce réalisée par exemple en matériau composite.

Bien entendu, l'invention pourra également être mise en oeuvre avec un siège 10 définissant plus de trois places 12 ou même un siège 10 comportant deux ou une seule place 12. Il est à noter toutefois qu'une assise 11 monobloc définissant au moins deux places 12 permet de faciliter la réalisation d'un siège multiplaces et d'améliorer la capacité de déformation d'un tel siège.

Plus précisément, comme on peut le voir clairement sur la figure 2, l'assise 11 comporte une portion principale d'assise 15 sur laquelle vient en appui la partie inférieure du corps des passagers et un rebord 16 issu de la portion principale d'assise 15. Le rebord 16 est légèrement incurvé en direction de l'arrière du siège 10 de manière à épouser la forme du corps du passager.

L'assise 11 comporte deux renforcements transversaux 19 positionnés de part et d'autre de la portion principale d'assise 15, c'est-à-dire du côté du bord arrière et du bord avant de la portion principale d'assise 15. Chaque renforcement transversal 19 est défini par une forme particulière de la paroi d'assise 20 s'étendant suivant l'axe transversal X2 de l'assise 11.

Dans l'exemple de réalisation, chaque renforcement transversal 19 est formé par deux portions de la paroi d'assise 20 en vis-à-vis l'une de l'autre reliées entre elles par une portion de liaison de manière à présenter une section en forme en U. Chaque renforcement transversal 19 présente la forme d'une cuvette ouverte du côté supérieur de l'assise 11. Avantageusement, les renforcements transversaux 19 s'étendent d'un bord d'extrémité à l'autre du siège 10 suivant toute la largeur du siège 10 mesurée suivant l'axe X2.

Les renforcements transversaux 19, la portion principale d'assise 15, et le rebord 16 sont de préférence réalisés d'un seul tenant et constituent donc une seule et même pièce. Cette pièce pourra être obtenue par exemple par moulage.

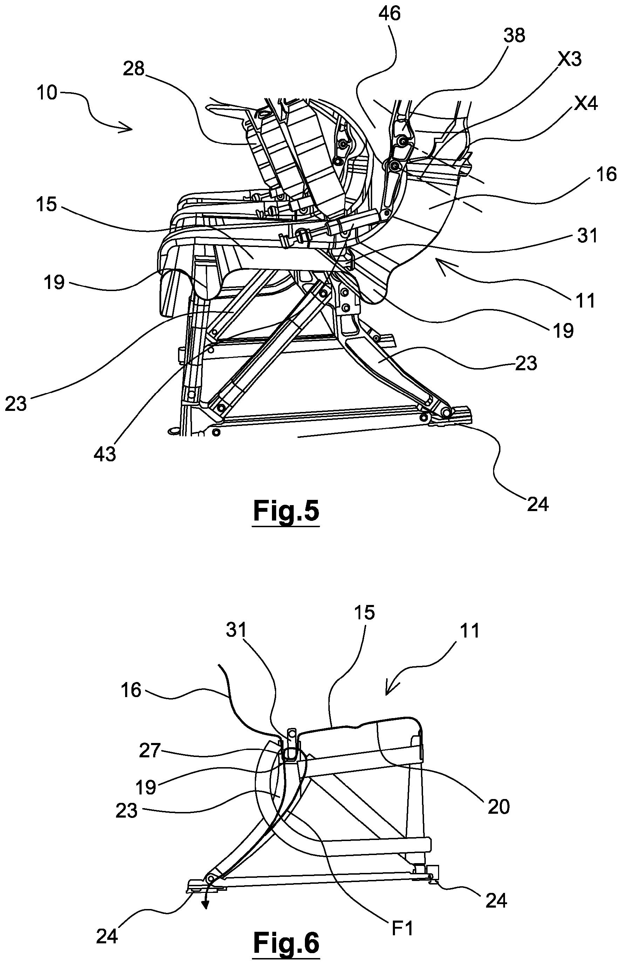

En variante, la section des renforcements transversaux 19 pourra présenter une section en forme en O, en T, en L. En variante, le siège 10 pourra comporter seulement le renforcement transversal 19 situé du côté du bord arrière de l'assise 11 entre la portion principale d'assise 15 et le rebord 16. Le siège 10 peut alors être dépourvu du renforcement transversal 19 situé du côté du bord avant du siège 10, comme cela est illustré sur la figure 6.

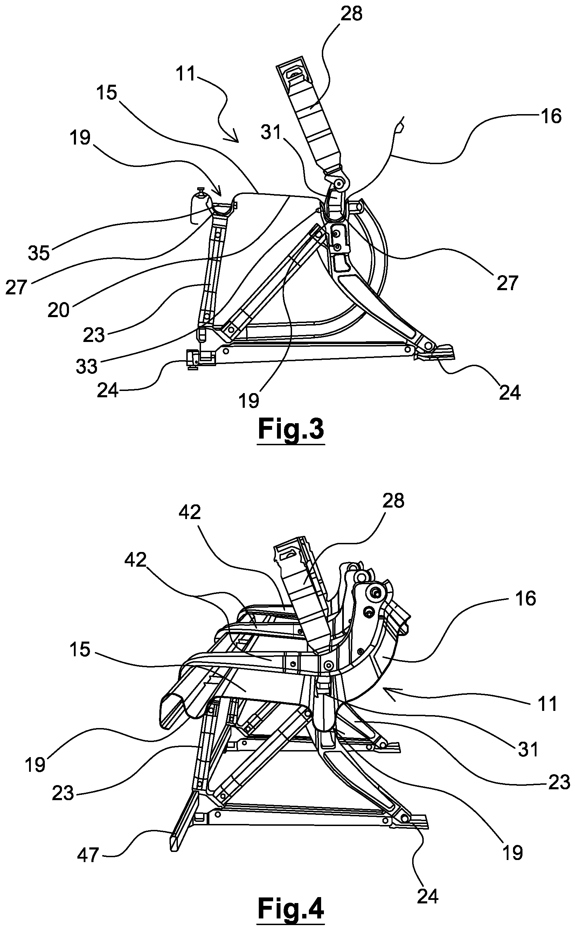

Des pieds de support 23 visibles notamment sur les figures 2 à 5 sont destinés à supporter l'assise 11. Ces pieds de support 23 sont munis de verrous 24 pour assurer la fixation par serrage du siège 10 sur des rails (non représentés) issus de la cabine d'aéronef. Chaque pied de support 23 comporte dans sa partie supérieure deux logements 27, montrés sur la figure 3. Ces logements 27 sont destinés à recevoir respectivement une portion d'un renforcement transversal 19 avant et d'un renforcement transversal 19 arrière. A cette fin, les logements 27 des pieds de support 23 présentent une forme complémentaire du renforcement transversal 19 correspondant.

Par ailleurs, des ceintures de sécurité 28 comportent des ancrages 31 pour assurer la fixation des ceintures 28 sur le siège 10. De préférence, chaque ancrage 31 est positionné dans un logement 27 correspondant d'un pied de support 23 au niveau du renforcement transversal 19 arrière. L'assise 11 est localement serrée entre l'ancrage 31 d'une ceinture de sécurité 28 et le pied de support 23 correspondant. Une telle configuration permet de minimiser l'effort de charge passant par l'assise 11 du fait de la reprise directe par le pied de support 23 de l'effort généré par le passager et représenté par la flèche F1 sur la figure 6.

Comme cela est illustré par la figure 3, chaque ancrage 31 pourra être constituée par une pièce trouée formant une entretoise s'étendant entre les portions en vis-à-vis de la paroi d'assise 20 définissant le renforcement transversal 19. L'ancrage 31 autorise le passage d'un organe de fixation 33, par exemple une vis, pénétrant à l'intérieur d'ouvertures réalisées dans les portions en vis-à-vis de la paroi 20 formant le renforcement arrière 19 et dans les parois correspondantes du pied de support 23 définissant un logement 27.

Par ailleurs, du côté du bord avant du siège 10, les pieds de support 23 sont fixés à l'assise 11 au moyen d'organes de fixation 35, par exemple des vis, traversant des ouvertures ménagées dans les portions en vis-à-vis de la paroi 20 formant le renforcement avant 19 et dans les parois correspondantes du pied de support 23 définissant un logement 27. Une entretoise, non représentée, montée autour de la vis 35 pourra être prévue pour rigidifier la structure.

Les renforcements transversaux 19 présentent avantageusement une section constante suivant toute leur longueur. Une telle configuration présente l'intérêt d'être modulable en permettant d'adapter le positionnement des pieds de support 23 le long du siège 10 par rapport aux rails dont la position, et notamment l'écart, est susceptible de varier du fait du l'irrégularité du plancher de la cabine d'aéronef.

Comme cela est montré sur les figures 1 et 5, le siège 10 comporte également des dossiers 38 rapportés par rapport à l'assise 11. Les dossiers 38 sont aptes à pivoter par rapport à l'assise 11 autour d'un axe transversal X3. A cet effet, les dossiers 38 sont montés rotatifs sur des crosses 42. Ces crosses 42, globalement en forme de L, sont solidarisées de la portion principale 15 et du rebord 16 de l'assise 11 au moyen d'organes de fixation. Ces organes de fixation sont par exemple constitués par des vis insérés dans des trous correspondants réalisés dans la crosse 42 et l'assise 11. Les zones de fixation des crosses 42 sur l'assise 11 sont référencées 44 sur la figure 2. Chaque crosse 42 pourra présenter une ouverture pour autoriser le passage d'une ceinture de sécurité 28 correspondante.

De préférence, afin de régler l'inclinaison des dossiers 38, un vérin 43 visible en figure 1 et 5 est positionné entre l'assise 11 et chaque dossier 38. La commande du vérin 43 pourra être effectuée par exemple au moyen d'un bouton relié au vérin 43 au moyen d'un câble de connexion. Le bouton pourra être porté de façon classique par un des accoudoirs. Les dossiers 38 pourront être situés dans un prolongement du rebord 16 de l'assise 11.

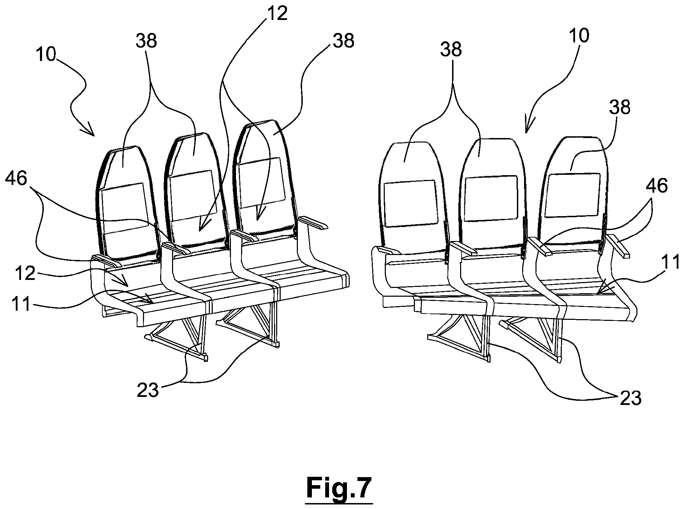

Comme cela est illustré par les figures 1 et 7, les accoudoirs 46 sont positionnés de part et d'autre de chaque place 12 du siège 10. Les accoudoirs 46 sont de type relevable. A cet effet, les accoudoirs 46 comportent une de leurs extrémités montée mobile en rotation par rapport à la crosse 42 autour d'un axe transversal X4, tel que montré sur la figure 5. En variante, les accoudoirs 46 pourront être fixes par rapport à la crosse 42.

Par ailleurs, une barre 47 montrée notamment sur les figures 1 et 2 est reliée aux pieds de support 23. Cette barre 47 a une fonction de maintien mécanique du siège 10 ainsi qu'une fonction d'arrêt des bagages.

Comme cela ressort clairement de la figure 7, le siège 10 selon la présente invention permet de supporter des déformations importantes lorsqu'il est soumis à des tests de crash imposant préalablement des contraintes de tangage et de roulis à travers la déformation du plancher de l'aéronef.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention tel que défini par les revendications.

## Revendications

1. Siège (10) destiné à être installé dans une cabine d'aéronef comportant une assise (11) à au moins une place, et un pied (23) de support supportant l'assise (11),
- l'assise (11) comportant une paroi (20) ayant une forme définissant au moins un renforcement transversal (19) de l'assise (11),
- ledit siège comportant en outre au moins un ancrage (31) d'une ceinture de sécurité,
**caractérisé en ce que** ledit ancrage (31) de ceinture de sécurité est positionné dans un logement (27) du pied (23) de support, et **en ce que** l'assise (11) est localement serrée entre l'ancrage (31) de ceinture de sécurité et le pied (23) de support du siège (10).

2. Siège (10) selon la revendication 1, **caractérisé en ce que** l'assise (11) est réalisée d'un seul tenant.

3. Siège (10) selon la revendication 2, **caractérisé en ce que** l'assise (11) définit au moins deux places (12).

4. Siège (10) selon l'une quelconque des revendications 1 à 3, **caractérisé en ce que** le renforcement transversal (19) présente une section constante suivant toute sa longueur.

5. Siège (10) selon l'une quelconque des revendications 1 à 4, **caractérisé en ce que** l'assise (11) comporte une portion principale d'assise (15) et un rebord (16) issu de la portion principale d'assise (15).

6. Siège (10) selon la revendication 5, **caractérisé en ce qu'**il comporte deux renforcements transversaux (19) positionnés de part et d'autre de la portion principale d'assise (15).

7. Siège (10) selon l'une quelconque des revendications 1 à 6, **caractérisé en ce qu'**il comporte au moins un dossier (38) apte à pivoter par rapport à l'assise (11) autour d'un axe transversal (X3).

8. Siège (10) selon la revendication 7, **caractérisé en ce que** le dossier (38) est monté rotatif sur une crosse (42).

9. Siège (10) selon la revendication 8, **caractérisée en ce que** la crosse (42) est solidaire de l'assise (11).

10. Siège (10) selon la revendication 8 ou 9, **caractérisé en ce qu'**il comporte au moins un vérin (43) positionné entre le dossier (38) et la crosse (42) correspondante.

11. Siège (10) selon l'une quelconque des revendications 1 à 10, **caractérisé en ce qu'**il comporte en outre des accoudoirs (46) situés de part et d'autre de chaque place du siège (10).

12. Siège (10) selon l'une quelconque des revendications 1 à 11, **caractérisé en ce que** la section du ou des renforcements transversaux (19) présentent une forme en O, en T, en L, ou en U.

## Patentansprüche

1. Sitz (10) zum Einbau in eine Flugzeugkabine mit einer Sitzfläche (11) mit mindestens einem Sitzplatz und einem Stützbein (23) für die Sitzfläche (11), wobei
- die Sitzfläche (11) eine Wand (20) aufweist, deren Form mindestens ein Querversteifungsmittel (19) der Sitzfläche (11) definiert,
- der Sitz ferner mindestens eine Verankerungseinrichtung (31) für einen Sicherheitsgurt aufweist,
**dadurch gekennzeichnet, dass** die Sicherheitsgurtverankerungseinrichtung (31) in einem Gehäuse (27) in dem Stützbein (23) angeordnet ist, und dass die Sitzfläche (11) lokal zwischen der Sicherheitsgurtverankerungseinrichtung (31) und dem Sitzbein (23) für den Sitz (10) eingespannt ist.

2. Sitz (10) nach Anspruch 1, **dadurch gekennzeichnet, dass** die Sitzfläche (11) einstückig ausgeführt ist.

3. Sitz (10) nach Anspruch 2, **dadurch gekennzeichnet, dass** die Sitzfläche (11) mindestens zwei Sitzplätze (12) definiert.

4. Sitz (10) nach einem der Ansprüche 1 bis 3, **dadurch gekennzeichnet, dass** das Querversteifungsmittel (19) über ihre gesamte Länge einen konstanten Querschnitt aufweist.

5. Sitz (10) nach einem der Ansprüche 1 bis 4, **dadurch gekennzeichnet, dass** die Sitzfläche (11) einen Hauptsitzflächenabschnitt (15) und einen Flansch (16) aus dem Hauptsitzflächenabschnitt (15) umfasst.

6. Sitz (10) nach Anspruch 5, **dadurch gekennzeichnet, dass** er zwei Querversteifungsmittel (19) umfasst, die zu beiden Seiten des Hauptsitzflächenabschnitts (15) positioniert sind.

7. Sitz (10) nach einem der Ansprüche 1 bis 6, **dadurch gekennzeichnet, dass** er mindestens eine Rückenlehne (38) umfasst, die relativ zur Sitzfläche (11) um eine Querachse (X3) schwenkbar ist.

8. Sitz (10) nach Anspruch 7, **dadurch gekennzeichnet, dass** die Rückenlehne (38) an einer Verbindungsstange (42) drehbar montiert ist.

9. Sitz (10) nach Anspruch 8, **dadurch gekennzeichnet, dass** die Verbindungsstange (42) einstückig mit der Sitzfläche (11) ausgebildet ist.

10. Sitz (10) nach Anspruch 8 oder 9, **dadurch gekennzeichnet, dass** er mindestens einen Zylinder (43) umfasst, der zwischen der Rückenlehne (38) und der entsprechenden Verbindungsstange (42) positioniert ist.

11. Sitz (10) nach einem der Ansprüche 1 bis 10, **dadurch gekennzeichnet, dass** er ferner Armlehnen (46) zu beiden Seiten jedes Sitzplatzes des Sitzes (10) umfasst.

12. Sitz (10) nach einem der Ansprüche 1 bis 11, **dadurch gekennzeichnet, dass** der Querschnitt des mindestens einen Querversteifungsmittels (19) eine O-, T-, L- oder U-Form aufweist.

## Claims

1. A seat (10) to be installed in an aircraft cabin and comprising a seat base (11) having at least one seating place, and a support leg (23) for the seat base (11),
- the seat base (11) comprising a wall (20) whose shape defines at least one transverse reinforcement (19) of the seat base (11),
- said seat furthermore comprising at least one anchor means (31) for a safety belt,
**characterized in that** said seat belt anchor means (31) is positioned in a housing (27) in the support leg (23), and **in that** the seat base (11) is locally clamped between the seat belt anchor means (31) and the support leg (23) for the seat (10) .

2. The seat (10) according to claim 1, **characterized in that** the seat base (11) is made in one piece.

3. The seat (10) according to claim 2, **characterized in that** the seat base (11) defines at least two seating places (12) .

4. The seat (10) according to any one of the claims 1 to 3, **characterized in that** the transverse reinforcement (19) has a constant section along its entire length.

5. The seat (10) according to any one of the claims 1 to 4, **characterized in that** the seat base (11) comprises a main seat base portion (15) and a flange (16) extending from the main sitting surface portion (15).

6. The seat (10) according to claim 5, **characterized in that** it comprises two transverse reinforcements (19) positioned on either side of the main seat base portion (15).

7. The seat (10) according to any one of the claims 1 to 6, **characterized in that** it comprises at least one backrest (38) able to pivot about a transverse axis (X3) relative to the seat base (11).

8. The seat (10) according to claim 7, **characterized in that** the backrest (38) is rotatably mounted on a tie bar (42) .

9. The seat (10) according to claim 8, **characterized in that** the tie bar (42) is integral with the seat base (11).

10. The seat (10) according to claim 8 or 9, **characterized in that** it comprises at least one jack (43) positioned between the backrest (38) and the corresponding tie bar (42).

11. The seat (10) according to any one of the claims 1 to 10, **characterized in that** it further comprises armrests (46) on either side of each seating place of the seat (10).

12. The seat (10) according to any one of the claims 1 to 11, **characterized in that** the cross section of the at least one transverse reinforcement (19) has an O-, T-, L-, or U-shape.
